# EUROPÄISCHE PATENTANMELDUNG

(11) **EP 2 312 171 A2**
(43) Veröffentlichungstag der Anmeldung: **20.04.2011**
(21) Anmeldenummer: 10013310.7
(22) Anmeldetag: 05.10.2010
(51) Int. Cl.: F16C 3/02

(54) **Verfahren zur Reduzierung und Vermeidung von Materialermüdung in Biegespannungen ausgesetzten sich drehenden Wellen**

(30) Priorität: 13.10.2009 EP 09012893
(71) Anmelder: Mitsch, Franz, 64646 Heppenheim (DE)
(72) Erfinder: Mitsch, Franz, 64646 Heppenheim (DE)
(74) Vertreter: Benz, Jürgen

(57) **Zusammenfassung**

Die Erfindung betrifft sich drehenden Wellen oder Achsen, die einem wechselnden vorwiegend senkrecht zu ihr einwirkenden Biegemoment ausgesetzt sind und somit einer verstärkten Materialermüdung unterliegen.

Die Erfindung betrifft insbesondere ein Verfahren zur Reduzierung von derart auftretenden Biege- bzw. Druck-/Zugspannungen auf eine Achse oder Welle durch Erzeugung einer längs zur Achse oder Welle gerichteten Vorspannung, was erfindungsgemäß im einfachsten Fall mittels eines in der Achse oder Welle eingebrachten Spannbolzens oder einer Spannniet erfolgt.

## Beschreibung

Die Erfindung betrifft sich drehenden Wellen oder Achsen, die einem wechselnden, vorwiegend senkrecht zu ihr einwirkenden Biegemoment ausgesetzt sind und somit einer verstärkten Materialermüdung unterliegen.

Die Erfindung betrifft insbesondere ein Verfahren zur Reduzierung oder Verhinderung von Schäden durch Materialermüdung auf Grund der auftretenden Biege- bzw. Druck-/Zugspannungen auf eine Welle durch Erzeugung einer längs zur Achse oder Welle gerichteten Vorspannung, was erfindungsgemäß im einfachsten Fall mittels eines in der Welle eingebrachten Spannbolzens oder einer Spannniet erfolgt.

Auf Achsen oder Wellen wirken in der Regel unterschiedliche Kräfte. So müssen Wellen beispielsweise das Gewicht der mit ihnen verbundenen Motoren, Getriebe oder der Gehäuse / Chassis aufnehmen. Je nach Konstruktion können dabei Biegemomente senkrecht zur Welle auftreten die im Fahrbetrieb bei sich drehender Welle wechselnd auf die Wellenoberfläche einwirken so zu einer relativ hohen Spannung an der Oberfläche und damit Belastung des Wellenwerkstoffes führen können.

So erzeugt beispielsweise die Gewichtskraft eines Waggons oder einer Lokomotive eine Vertikalkraft, die auf die Lager bzw. auf die zugehörige Welle unter Betrieb permanent einwirkt.

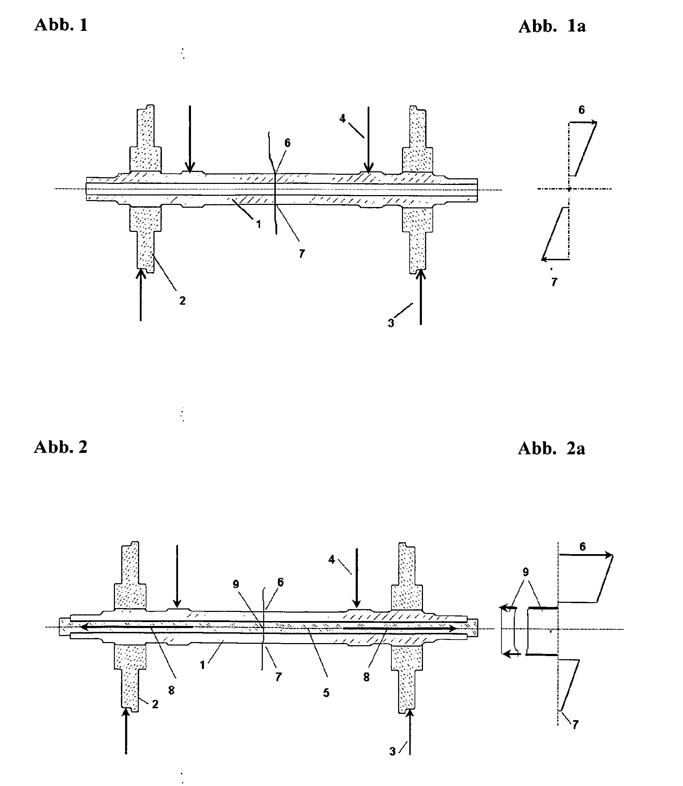

Abbildung 1 zeigt dies zur Veranschaulichung am Beispiel einer Radsatzwelle, wie sie in Schienenfahrzeugen verwendet wird, dargestellt. Dabei erzeugt die Gewichtskraft des Waggons bzw. der Lokomotive die dargestellte Radlager-Vertikalkraft (4). Diese wirkt der vertikalen Radkraft (3), welche durch das Rad von der Schiene übertragen wird, entgegen. Da beide Kräfte an unterschiedlichen Stellen auf der Welle mit unterschiedlichen Hebelverhältnissen angreifen, entsteht somit in der Welle ein Biegemoment, das notwendigerweise Spannungen im Werkstoff der Welle verursacht.

Betrachtet man die Mitte der Radsatzwelle (1) so entsteht das in Abb. 1a gezeichnete Spannungsverhältnis. Dabei stellen die Pfeile (6) eine Druckspannung und die Pfeile (7) eine Zugspannung dar. Durch die schnelle Rotation der Welle wechseln sich Druck- und Zugspannung bei jeder Umdrehung ab bzw. kehren sich in ihrer Wirkrichtung um, so dass eine dynamische Zug-Druck-Spannung in der Welle entsteht, die ihren höchsten Betrag an der Oberfläche der Welle erreicht. Diese Verhältnisse finden sich in ähnlicher Form über die gesamte Länge der Welle mit größerer und kleinerer Spannung, je nach Hebelverhältnissen.

Somit kommt es zu einer hohen Materialbeanspruchung der Welle, was letztlich bei Dauerbelastung zu einer Materialermüdung und, sofern Materialbeschaffenheit und Materialstärke nicht ausreichend ausgelegt wurden, zu Rissen oder gar zu spontanen Ermüdungsbrüchen führen kann. Die Schädigung kann beschleunigt werden, wenn die Oberfläche der Welle durch äußere Einflüsse im Betrieb gestört oder verletzt wird (z. B. Steinschlag) oder aber durch Einschlüsse im Werkstoff im Bereich der Oberfläche destabilisiert wird. Heute oft verwendete hochfeste Werkstoffe mit Festigkeiten bis 1000 N/mm² wie z.B. bei Chrom-Nickel-Molybdänstählen (z.B. 34CRNiMo6), reagieren auf solche oberflächennahen Störungen vergleichsweise empfindlich im Vergleich zu weniger festen Stählen. So reichen bereits bei entsprechenden Kerbfällen Spannungen, die kaum größer sind als ein Zehntel der zulässigen Spannung, aus, um den Werkstoff zum Ermüden zu bringen, so dass ein Anriss erfolgt, der zum Dauerbruch führt. Auf diese Weise entstehen beispielsweise Radsatzwellenbrüche oder Risse in Radsatzwellen von Schienenfahrzeugen.

Es bestand also die Aufgabe, entsprechenden oben geschilderten Belastungen ausgesetzte Wellen, wie sie zur Zeit in modernen technischen Anlagen oder Fahrzeugen eingesetzt werden in der Weise zu verbessern, dass keine oder keine nennenswerte Materialermüdung mit Rissen oder Brüchen während der üblichen Betriebs-Lebensdauer der Anlage oder des Straßen- oder Schienenfahrzeuges auftritt.

Es bestand insbesondere die Aufgabe die genannten Verbesserungen zu erreichen ohne dabei einfach nur stärkere und / oder belastungsfähigere Materialien einzusetzen. Vielmehr sollten für die jeweiligen Zwecke verwendete herkömmliche Wellen und Achsen, insbesondere auch solche, die bereits im Einsatz sind, durch entsprechende Maßnahmen verbessert werden.

Die Aufgabe wurde entsprechend der unten und in den Ansprüchen dargelegten Maßnahmen und Gestaltungen gelöst.

Gegenstand der Erfindung ist ein Verfahren, bei dem die in der sich drehenden einem Biegemoment unterliegenden Welle auftretende Beanspruchung durch Wechselspannungen reduziert werden kann.

Gegenstand der Erfindung ist insbesondere ein Verfahren zur Reduzierung oder Verhinderung von Schäden durch Materialermüdung an sich drehenden Achsen oder Wellen, die durch Last einem Biegemoment ausgesetzt sind, welches eine senkrecht zur Achse /Welle gerichtete Druckspannung und eine entgegen gerichtete gleichgroße Zugspannung erzeugt und somit eine dynamische Druck-Zugspannung an der Oberfläche der Welle / Achse entsteht, wobei man die Welle/Achse (1) mit einem Spannelement (5) ausstattet, das längs durch das Innere (5a) der Welle/Achse geführt wird und an den beiden Stirnseiten (1 a), (1 b) der Welle/Achse mit dieser mit einer Kraft verspannt wird, die ausreichend ist, dass die durch das Biegemoment erzeugte Druckspannung (6) größer wird als die größte auftretende entgegen gerichtete Zugspannung (7) und somit die Welle/Achse eine statische Vorspannung erfährt, welche durch Erzeugung einer negativen Mittelspannung (Druckspannung) einer Materialermüdung entgegenwirkt.

Die Erfindung betrifft insbesondere ein entsprechendes Verfahren, bei dem eine Vorspannung eingestellt wird, welche bewirkt, dass die senkrecht zur Achse / Welle (1) gerichtete Zugspannung (7) bei Rotation der Welle im Wert klein oder gar gleich oder kleiner Null ist.

Die Erfindung betrifft insbesondere ein entsprechendes Verfahren, bei dem die Vorspannung des Spannelementes (5) so gewählt wird, dass die senkrecht zur Achse / Welle (1) gerichtete Zugspannung (7) bei Rotation der Welle vollständig in die Zugspannung (9) übergeführt wird, welche vom Spannelement (5) aufgenommen wird und längs der Achse / Welle (1) wirkt oder bei dem die Vorspannung des Spannelementes (5) gerade so hoch gewählt wird, dass die resultierenden maximalen Druckspannungen in der Achse ./. Welle ein zulässiges Maß nicht überschreiten.

Gegenstand der Erfindung ist auch ein Verfahren zur Herstellung einer, einem permanenten Biegemoment ausgesetzten im Betrieb sich drehenden Achse oder Welle, welche ihre Festigkeit beibehält und keiner nennenswerten Materialermüdung unterliegt, wobei man durch Einführung eines Spannelementes (5) in die Achse / Welle (1) und Verspannen der beiden Elemente (5) und (1) die ursprüngliche senkrecht zur Achse / Welle wirkende Zugspannung (6) teilweise oder vollständig in eine längs der Welle gerichtete vom Spannelement (5) aufgenommene Zugkraft (9) umleitet, so dass überwiegend oder ausschließlich nur noch eine Druckspannung (7) auf der Achse / Welle einwirkt.

Erfindungsgemäß wird die Welle (1) auf Druck vorgespannt. Damit wird erreicht, dass die Druckspannung (6), ausgelöst durch die auf die Welle einwirkende permanente Kraft (z.B. durch das Gewicht der Maschine, des Getriebes, des Chassis des Fahrzeugs, etc. ) und der Vorspannkraft, größer wird als die ihr entgegenwirkende Zugspannung (7), welche ohne Vorspannung von gleicher Größe ist. Ist die Druckspannung aus der Vorspannkraft größer als die größte auftretende Zugspannung, so verändert sich der Spannungswechsel bei jedem Umlauf der Welle in eine schwellende Druck- Spannung wie in Abb. 2a dargestellt. Dadurch erhöht sich zwar die Spannung im betreffenden Druckbereich der Welle (Druckspannung (7)), die entsprechende Zugspannung (6) nimmt dabei deutlich niedrigere Werte an. In günstigen Fällen, bei entsprechend hoher Vorspannung durch das Spannelement (5) verbleibt bei jedem Wellenumlauf die Spannung im Druckbereich, während keine Kräfte mehr wirksam sind, welche eine entgegen gerichtete Zugspannung verursachen. Sattdessen wird diese längs zur Welle von dem Spannelement (5) aufgenommen. In diesem Fall, wird somit die ursprünglich auf die Welle senkrecht einwirkende Zugspannung (6) in die längs der Welle gerichtete und vom Spannelement (5) aufgenommene Spannung (9) umgeleitet, so dass auf die Welle (1) nur noch die, wenn auch höhere Druckspannung (7) einwirkt. Durch die mit Hilfe dieser statischen Vorspannung erzeugten negativen Mittelspannung werden die Spannungen des Systems ganz oder teilweise in den Druckbereich verschoben und dadurch der Werkstoff der Welle durch das permanent auf sie einwirkende Biegemoment weniger beansprucht, was eine deutlich höhere Lebensdauer der Achse oder Welle zur Folge hat.

Die erforderliche Druckspannung wird erfindungsgemäß durch das Vorspannen eines Spannelementes, welches längs durch die Welle geführt wird, erzeugt. In der Regel sind Wellen nicht massiv sondern als Rohr gefertigt und ausgelegt.

Das Spannelement hat konstruktionsbedingt eine deutlich kleinere Querschnittsfläche als die Welle selbst. Erfindungsgemäß sollte die Querschnittsfläche der Achse / Welle nicht mehr als 3 - 10 mal, vorzugsweise nicht mehr als 4 - 7 mal größer als die Querschnittsfläche des Spannelementes sein, damit eine ausreichend große Vorspannkraft eingestellt werden kann.

Durch die Vorspannung bzw. Dehnung des Spannelementes, welches sich erfindungsgemäß an den Stirnseiten der Welle abstützt, erfährt die Welle eine gleichförmige Druckbelastung, was eine entsprechende Druckkraft bedeutet.

Um die Wechselbeanspruchung z.B. aus Biegemomenten in eine schwellende Beanspruchung zu überführen, muss die durch das Spannelement erzeugte längs der Welle wirkende Druckspannung (9) größer sein, als die größte auftretende Zugspannung (6). Im Spannelement herrscht eine dieser Druckspannung entgegen wirkende Zugspannung. Die Höhe der Zugspannung im Spannelement ist gleich dem Betrag der in der Welle durch das Spannelement erzeugten Druckspannung multipliziert mit dem Verhältnis der Querschnittsflächen der Welle und des Spannelementes. Tritt z. B. an der Oberfläche der Welle eine Wechselspannung von ± 100 N/mm² auf und die Querschnittsfläche der Welle ist 7 mal so groß wie die Querschnittsfläche des Spannelements, so muss das Spannelement mit mindestens 7 × 100 N/mm² =700 N/mm² vorgespannt werden. Bei einem Spannelement von z.B. 70 mm Durchmesser würde sich eine Vorspannkraft von 2700 kN ergeben. Bei üblichen Werkstoffen sind Spannungen von z. B. 900 N/mm² bei solchen Spannelementen möglich.

Würde diese Spannung von 900 N/mm² bei einem Spannelement von 70 mm Durchmesser vollständig ausgenutzt, ergäbe sich eine Vorspannkraft von bis zu 3.500 kN, so dass bei dem beispielhaft genannten Flächenverhältnis von 7 Druckspannungen von insgesamt 128 N/mm² (900 N/mm²/7) in die Welle eingebracht werden können.

Bei z. B. ursprünglich ±100 N/mm² Zug-Druck-Beanspruchung ergeben sich damit eine schwellende Druckbeanspruchung von 28 N/mm² bis 228 N/mm². Die Anzahl der vom Werkstoff ertragbaren Lastwechsel (also die Anzahl der Wellenumdrehungen) steigt dadurch um ein Vielfaches im Vergleich zu der ursprünglichen reinen Wechselbeanspruchung zwischen Druck- und Zugspannung.

Das Spannelement (5) ist erfindungsgemäß ein Bolzen, vorzugsweise aus einem hochfesten Stahl mit z. B. 500 - 1.500 N/ mm², vorzugsweise 900 - 1.000 N/mm² Zugfestigkeit. Die Vorspannung kann durch Verschrauben erfolgen, sofern der Bolzen mit einem Gewinde ausgestattet ist. Der Bolzen kann aber in Form eines Niet, welcher heiß in die Wellenbohrung eingebracht wird, vorliegen, so dass die notwendige Vorspannkraft durch Abkühlung erreicht wird.

Dadurch dass das die ursprüngliche Zugspannung aufnehmende Spannelement, vorzugsweise der Bolzen (5), nicht an seiner Mantelfläche mit der inneren Mantelfläche der Welle verbunden ist, verhält er sich bei Biegung der Welle wie eine Sehne und erfährt dadurch nur eine sehr geringe eigene Biegespannung, welche trotz der hohen Zugspannungen, die durch die Vorspannung im Spannelement (5) nunmehr auftreten, nicht zur Schädigung desselbigen führen.

Gegenstand der Erfindung ist nicht nur das oben und in den Ansprüchen beschriebene Verfahren, sondern auch eine entsprechende Welle oder Achse in Form eines Hohlstabes aus hochfestem Werkstoff, welche ein Spannelement im Inneren aufweist, das gegenüber den Stirnseiten der Welle / Achse unterschiedlich stark verspannt werden kann, und der Welle / Achse eine Vorspannung verleiht.

Ebenso ist Gegenstand der Erfindung die Verwendung einer diesbezüglichen Welle oder Achse zur Verhinderung von Schäden durch Materialermüdung bei biegebelasteten Wellen jeglicher Art, insbesondere bei Radsatzwellen von Schienenfahrzeugen oder Rotorwellen von Windkraftanlagen. Da bei letzteren in der Regel Kabel durch die Rotorwelle geführt werden, muss der Vorspannbolzen hohl sein, so dass dieser als Rohr, der das Spannelement (5) aufzunehmen vermag, eingebaut werden kann. Alternativ könnten in einem kleinen Lochkreis mehrere Schrauben am Umfang angebracht werden.

Generell kann die Erfindung jedoch auf alle biegebelasteten rotierenden Achsen und Wellen angewandt werden.

### Kurze Beschreibung der Abbildungen und der Bezugsgrößen

Abb. 1: Radsatzwelle des Standes der Technik (ohne Vorspannung)
Abb. 1a zugehöriges Kraft-Parallelogramm
Abb. 2: Radsatzwelle gemäß der Erfindung (mit Vorspannung)
Abb. 2a zugehöriges Kraft-Parallelogramm
   - 1: Radsatzwelle
   - 2: Radscheibe
   - 3: Vertikale Radkraft
   - 4: Radlager Vertikalkraft
   - 5: Vorspannbolzen
   - 6: Spannung in Radsatzwelle oben
   - 7: Spannung in Radsatzwelle unten
   - 8: Vorspannkraft im Spannbolzen
   - 9: Spannung im Spannbolzen

## Patentansprüche

1. Verfahren zur Reduzierung oder Verhinderung von Schäden durch Materialermüdung an sich drehenden Wellen, die durch Last einem Biegemoment ausgesetzt sind, welches eine senkrecht zur Welle gerichtete Druckspannung und eine entgegen gerichtete gleichgroße Zugspannung erzeugt und somit eine dynamische Druck-Zugspannung an der Oberfläche der Welle entsteht, **dadurch gekennzeichnet, dass** man die Welle (1) mit einem Spannelement (5) ausstattet, das längs durch das Innere (5a) der Welle geführt wird und an den beiden Stirnseiten (1 a), (1 b) der Welle mit dieser mit einer Kraft verspannt wird, die ausreichend ist, dass die durch das Biegemoment erzeugte Druckspannung (6) größer wird als die größte auftretende entgegen gerichtete Zugspannung (7) und somit die Welle eine Vorspannung erfährt, welche einer Materialermüdung entgegenwirkt.

2. Verfahren nach Anspruch 1, **dadurch gekennzeichnet, dass** eine Vorspannung eingestellt wird, welche bewirkt, dass die senkrecht zur Welle (1) gerichtete Zugspannung (7) bei Rotation der Welle im Wert klein oder Null ist.

3. Verfahren nach Anspruch 1, **dadurch gekennzeichnet, dass** die Vorspannung des Spannelementes (5) so gewählt wird, dass die senkrecht zur Welle (1) gerichtete Zugspannung (7) bei Rotation der Welle vollständig in die Zugspannung (9) übergeführt wird, welche vom Spannelement (5) aufgenommen wird und längs der Welle (1) wirkt.

4. Verfahren zur Herstellung einer, einem permanenten Biegemoment ausgesetzten im Betrieb sich drehenden Achse oder Welle, welche ihre Festigkeit beibehält und keiner nennenswerten Materialermüdung unterliegt, **dadurch gekennzeichnet, dass** man durch Einführung eines Spannelementes (5) in die Welle (1) und Verspannen der beiden Elemente (5) und (1) die ursprüngliche senkrecht zur Welle wirkende Zugspannung (6) teilweise oder vollständig in eine längs der Welle gerichtete vom Spannelement (5) aufgenommene Zugkraft (9) umleitet, so dass überwiegend oder ausschließlich nur noch eine Druckspannung (7) auf die Welle einwirkt.

5. Verfahren nach einem der Ansprüche 1 - 4, **dadurch gekennzeichnet, dass** das Spannelement ein Spannbolzen ist, der durch das Innere der rohrförmigen Welle geführt ist und an den Enden mit den Enden der Welle verklemmt oder verschraubt wird.

6. Verfahren nach einem der Ansprüche 1 - 4, **dadurch gekennzeichnet, dass** das Spannelement eine Spannniet ist.

7. Verfahren nach einem der Ansprüche 1 - 6, **dadurch gekennzeichnet, dass** das Spannelement nicht an der inneren Mantelfläche der Welle anliegt.

8. Verfahren nach einem der Ansprüche 1 - 7, **dadurch gekennzeichnet, dass** die Oberfläche der Welle 3 bis 10 mal größer ist als die Oberfläche des Spannelementes.

9. Verfahren nach einem der Ansprüche 1 - 8, **dadurch gekennzeichnet, dass** das Biegemoment durch das Gewicht eines die Welle tragenden Bau- oder Maschinenteils verursacht wird.

10. Verwendung eines Verfahrens nach einem der Ansprüche 1 - 9 zur Verhinderung von Schäden durch Materialermüdung bei Radsatzwellen von Schienenfahrzeugen oder Wellen von Windkraftanlagen, insbesondere Rotorwellen.

11. Welle oder Achse in Form eines Hohlstabes aus hochfestem Werkstoff, welche ein Spannelement im Inneren aufweist, das gegenüber den Stirnseiten der Welle / Achse unterschiedlich stark verspannt werden kann, und der Welle eine Vorspannung verleiht.

12. Verwendung einer Welle nach Anspruch 11 zur Verhinderung von Schäden durch Materialermüdung bei Radsatzwellen von Schienenfahrzeugen oder Wellen von Windkraftanlagen, insbesondere Rotorwellen.
